# EUROPEAN PATENT APPLICATION

(11) **EP 3 276 914 A1**
(43) Date of publication of application: **31.01.2018**
(21) Application number: 15887220.0
(22) Date of filing: 21.09.2015
(51) Int. Cl.: H04L 29/08

(54) **DATA SHARING METHOD AND DEVICE FOR VIRTUAL DESKTOP**

(30) Priority: 27.03.2015 CN 201510141536
(71) Applicant: ZTE Corporation, Shenzhen, Guangdong 518057 (CN)
(72) Inventor: WANG, Changzheng, Shenzhen Guangdong 518057 (CN); XIU, Wenfei, Shenzhen Guangdong 518057 (CN); CHEN, Peiwen, Shenzhen Guangdong 518057 (CN)
(74) Representative: Regimbeau
(86) International application number: PCT/CN2015/090167
(87) International publication number: WO 2016/155266

(57) **Abstract**

Disclosed are a data sharing method and device for a virtual desktop. The method includes: acquiring information about an operation request for performing data sharing between a local terminal and a host of the virtual desktop; generating service information for data sharing according to the information about the operation request; and transmitting the service information for data sharing.

## Description

### TECHNICAL FIELD

The present disclosure relates to, but is not limited to, the field of communications.

### BACKGROUND

Virtual Desktop Infrastructure (VDI) is a technology that enables remote dynamic access of a desktop system and a unified data center hosting and allows a user to access a personal desktop system on a network through any device at any location at any time.

For a virtual desktop, a most commonly used function in the user's daily use is data sharing, i.e., data sharing and transmission between a client and the virtual desktop. For example, when utilizing the virtual desktop, the user needs to share local data with the virtual desktop or download a directory file on the virtual desktop to the client to use the file. It can be said that popularization of the virtual desktop is determined by operability and user-friendliness of data sharing. To meet the user's data sharing requirements, various approaches are provided, such as File Transfer Protocol (FTP) transferring, instant messaging transmission, file sharing, cloud transferring, etc. However, these approaches fail to be integrated with a virtual desktop system and need to be installed or deployed separately; and provide a poor experience in user-friendliness and operability and have a high requirement for the user's IT skills, and thus cannot be popularized among virtual desktops.

Therefore, how to achieve data sharing on the virtual desktop is an urgent problem to be solved.

### SUMMARY

The following is a summary of a subject described herein in detail. This summary is not intended to limit the scope of the claims.

The present disclosure provides a data sharing method and device for a virtual desktop to achieve data sharing on the virtual desktop.

A data sharing method for a virtual desktop includes: acquiring information about an operation request for performing data sharing between a local terminal and a host of the virtual desktop; generating service information for data sharing according to the information about the operation request; and transmitting the service information for data sharing.

Optionally, after transmitting the service information for data sharing, the method further includes: acquiring an operation result of data being shared; and outputting the operation result of data being shared.

A data sharing method for a virtual desktop includes: acquiring service information for data sharing between a terminal and a host of the virtual desktop; and performing an operation for data sharing according to the service information for data sharing.

Optionally, after performing the operation for data sharing according to the service information for data sharing, the method further includes: acquiring an operation result of data being shared; and transmitting the operation result.

Optionally, when the service information for data sharing indicates that the terminal requests to share local data with the host of the virtual desktop, performing the operation for data sharing according to the service information for data sharing includes: acquiring identity authentication information in the service information, where the identity authentication information is generated by the terminal; performing identity authentication on the terminal utilizing the identity authentication information; and reading data to be shared with the host of the virtual desktop after the identity authentication is successfully performed on the terminal.

A data sharing device for a virtual desktop includes: a first acquisition module configured to acquire information about an operation request for performing data sharing between a local terminal and a host of the virtual desktop; a generation module configured to generate service information for data sharing according to the information about the operation request; and a first transmission module configured to transmit the service information for data sharing to the host of the virtual desktop.

Optionally, the device further includes: a second acquisition module configured to acquire an operation result of data being shared; and an outputting module configured to output the operation result of data being shared.

A data sharing device for a virtual desktop includes: a third acquisition module configured to acquire service information for data sharing between a terminal and a host of the virtual desktop; and a management module configured to perform an operation for data sharing according to the service information for data sharing.

Optionally, the device further includes: a fourth acquisition module configured to acquire an operation result of data being shared; and a second transmission module configured to transmit the operation result.

Optionally, the management module includes: an acquisition unit configured to, when the service information for data sharing indicates that the terminal requests to share local data with the host of the virtual desktop, acquire identity authentication information in the service information, where the identity authentication information is generated by the terminal; an authentication unit configured to perform identity authentication on the terminal utilizing the identity authentication information; and a reading unit configured to read data to be shared with the host of the virtual desktop after the identity authentication is successful on the terminal.

A computer-readable storage medium is configured to store computer-executable instructions for executing any method described above.

In embodiments of the present disclosure, the service information for data sharing is transmitted to manage data being shared according to the service information, so that a data sharing and migration function of the virtual desktop are effectively achieved. Therefore, the operation for data sharing by a user becomes simple and clear.

Other aspects can be apparent after the accompanying drawings and detailed description are read and understood.

### BRIEF DESCRIPTION OF DRAWINGS

FIG. 1 is a flowchart of a data sharing method for a virtual desktop according to an embodiment of the present disclosure.
FIG. 2 is a flowchart of another data sharing method for a virtual desktop according to an embodiment of the present disclosure.
FIG. 3 is a schematic diagram illustrating networking of a virtual desktop based on a VDI architecture and a Spice transport protocol according to an embodiment of the present disclosure.
FIG. 4 is a structural diagram of a data sharing device for a virtual desktop according to an embodiment of the present disclosure.
FIG. 5 is a structural diagram of another data sharing device for a virtual desktop according to an embodiment of the present disclosure.
FIG. 6 is an interaction diagram of a data sharing method for a client and a virtual desktop according to an embodiment of the present disclosure.

### DETAILED DESCRIPTION

Embodiments of the present disclosure will be described below with reference to the accompanying drawings. If not conflicted, the embodiments herein and the features thereof may be combined with each other.

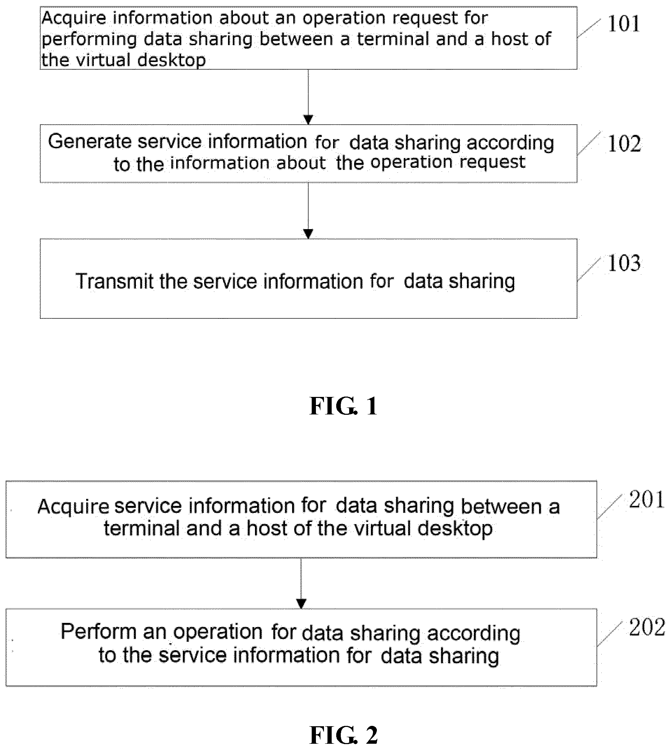

FIG. 1 is a flowchart of a data sharing method for a virtual desktop according to an embodiment of the present disclosure. The method illustrated in FIG. 1 includes steps described below.

In step 101, information about an operation request for performing data sharing between a local terminal and a host of the virtual desktop is acquired.

In step 102, service information for data sharing is generated according to the information about the operation request.

In step 103, the service information for data sharing is transmitted to the host of the virtual desktop.

In the method provided by the embodiment of the present disclosure, after receiving the information about the operation request for performing data sharing, the terminal generates the service information for data sharing and transmits the service information for data sharing, so as to effectively achieve a data sharing and migration function of the virtual desktop to make the operation for data sharing by a user simple and clear.

FIG. 2 is a flowchart of another data sharing method for a virtual desktop according to an embodiment of the present disclosure. The method illustrated in FIG. 2 includes steps described blow.

In step 201, service information for data sharing between a terminal and a host of the virtual desktop is acquired.

In step 202, an operation for data sharing is performed according to the service information for data sharing.

In the method provided by the embodiment of the present disclosure, after receiving the service information for data sharing, the host of the virtual desktop manages the data being shared according to the service information, so as to effectively achieve the data sharing and migration function of the virtual desktop to make the operation for data sharing by the user simple and clear.

The methods provided by embodiments of the present disclosure are further described below.

The information about the operation request means that it is detected that an object file is externally selected. The information about the operation request may include disk and directory information of the object file. The information about the operation request may further include operation information of the object file, such as sharing the object file located locally, deleting the object file located on the virtual desktop or sharing the object file located on the virtual desktop.

The service information for data sharing may include information about the object file and the operation information about the object file. The service information for data sharing may further include first identity authentication information generated locally or request information for acquiring second identity information. The first identity information is used for identity authentication when the host of the virtual desktop accesses the object file on the terminal. The second identity information is used for identity authentication when the terminal accesses the object file on the host of the virtual desktop.

After the terminal transmits the service information for data sharing, the method further includes:
acquiring, through the terminal, an operation result of data being shared; and
outputting, through the terminal, the operation result of data being shared.

The client learns the operation result of current data sharing by acquiring the operation result, and outputs the operation result to allow the user to know about the operation result of the current data sharing.

As can be seen from the above, no manual operation is required for the user during an entire processing flow from receiving the service information to receiving the operation result by the client, simplifying the processing flow of sharing while achieving data sharing.

Similarly, after the host of the virtual desktop performs the operation for data sharing according to the service information for data sharing, the method further includes:
acquiring, through the host of the virtual desktop, an operation result of data being shared; and
transmitting, through the host of the virtual desktop, the operation result.

After performing the management operation on the data being shared, the host of the virtual desktop acquires the operation result and transmits the operation result to the terminal to allow the user to know about the operation result of the current data sharing.

The service information may indicate sharing local data with the virtual desktop or deleting shared data stored on the virtual desktop.

When the service information for data sharing indicates that the terminal requests to share local data with the host of the virtual desktop, the host of the virtual desktop performs the operation for data sharing according to the service information for data sharing in the following manners:
acquiring, through the host of the virtual desktop, identity authentication information in the service information, where the identity authentication information is generated by the terminal;
performing, through the host of the virtual desktop, identity authentication on the terminal utilizing the identity authentication information; and
reading, through the host of the virtual desktop, the data to be shared with the host of the virtual desktop after the identity authentication is successful on the terminal.

When the terminal requests to share the local data with the host of the virtual desktop, to ensure data security of the client, the terminal may generate the identity authentication information and transmit the identity authentication information to the host of the virtual desktop. The identity authentication information may be transmitted through the service information or a separate message. After obtaining the identity authentication information, the host of the virtual desktop uses the identity authentication information to share data to be shared to prevent some illegal devices from maliciously reading data on the terminal.

Similarly, to prevent some illegal terminals from reading identity information of the host of the virtual desktop, identity authentication may also be performed when data being shared on the host of the virtual desktop is accessed.

The identity authentication information may be a username and a password and, of course, may be other identity authentication information, such as a random code.

An application example is used below to further explain the methods provided by embodiments of the present disclosure.

The embodiment of the present disclosure describes methods for performing data sharing between the terminal and the host of the virtual desktop. The communication between the above two devices is based on a communication protocol. The following illustrates an example in which the two devices interact with each other utilizing Simple Protocol for Independent Computing Environment (Spice).

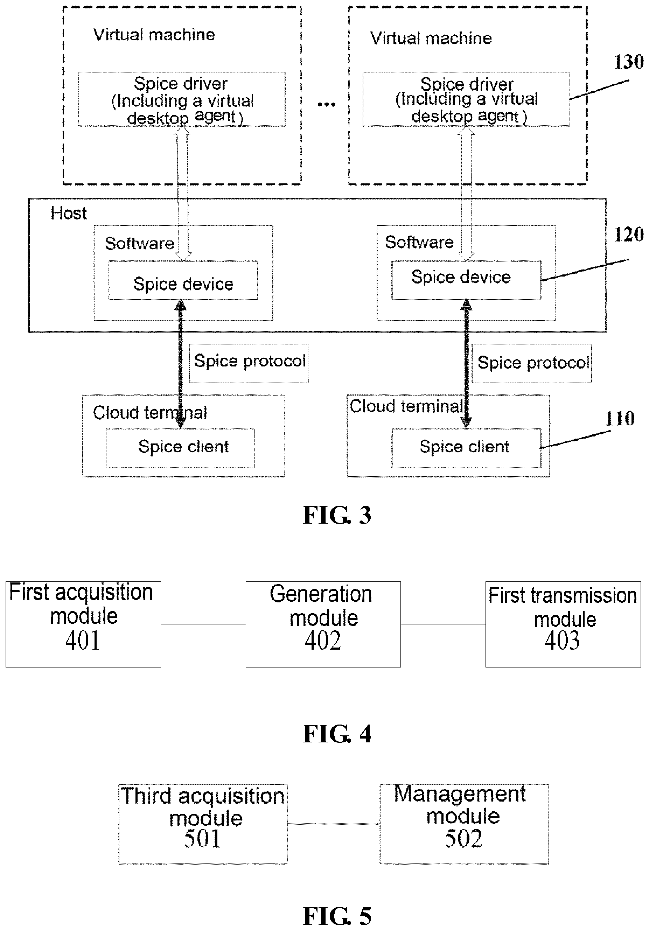

FIG. 3 is a schematic diagram illustrating networking of a virtual desktop based on a VDI architecture and a Spice transport protocol according to an embodiment of the present disclosure. Functions of each network element in FIG. 3 are described below.

Spice is an open-source virtualized push protocol that provides the same user experience as a physical desktop. Spice can zoom out a virtual desktop deployed on a server or on a remote computer. Spice is similar to other rendering-zoom out protocols used for remote desktop management. The Spice protocol includes the following three types of components:
a Spice driver, which is an internal component running in the virtual desktop and includes a virtual desktop agent component (e.g., Spice Vdagent), various drivers, etc; and the Spice driver may interact with a Spice client to achieve transmission and processing of service control messages. In the embodiment of the present disclosure, the internal component running in the virtual desktop mainly includes some common drivers, the virtual desktop agent (e.g., Spice Vdagent) and the like;
a Spice device, which is located on a virtualized server and simulated by a virtualization technology. In the embodiment of the present disclosure, the Spice device is a bridge for interactions between a client and the virtual desktop; and
a Spice client, which is a component running on a terminal device (which may be a traditional personal computer), and is configured to access the virtual desktop. The Spice client needs to share data with the virtual desktop or acquire data from the virtual desktop.

The Spice client is configured to acquire operation interactions between a user and the Spice client, create corresponding sharing information according to information obtained from the operation interactions, and transmit the sharing information.

The virtual desktop agent is configured to interact with the Spice client, and implement, according to a received message, actual sharing operations, such as sharing mounting, sharing removing of disks or documents and the like.

As can be seen, based on the VDI architecture and the Spice transport protocol, via reconstructions of the Spice Vdagent and the Spice client and in conjunction with operation and maintenance management, this method involves reconstructions of the Spice Vdagent and the Spice client as well as development and reconstructions of an operation and maintenance system. This method effectively achieves the data sharing and migration function of the virtual desktop to make the operation for data sharing by the user simple and clear. Moreover, the reconstructed method and process can quickly enhance user experience in data sharing and can bring about easy deployment and good economic returns.

FIG. 4 is a structural diagram of a data sharing device for a virtual desktop according to an embodiment of the present disclosure. As illustrated in FIG. 4, the data sharing device includes:
a first acquisition module 401 configured to acquire information about an operation request for performing data sharing between a local terminal and a host of the virtual desktop;

a generation module 402 configured to generate service information for data sharing according to the information about the operation request; and
a first transmission module 403 configured to transmit the service information for data sharing to the host of the virtual desktop.

In an implement of the embodiment of the present disclosure, the data sharing device further includes:
a second acquisition module configured to acquire an operation result of data being shared; and
an outputting module configured to output the operation result of the data being shared.

After having received the information about the operation request for performing data sharing, the data sharing device provided by the embodiment of the present disclosure generates the service information for data sharing and transmits the service information for data sharing, so as to effectively achieve the data sharing and migration function of the virtual desktop to make the operation for data sharing by the user simple and clear.

FIG. 5 is a structural diagram of another data sharing device for a virtual desktop according to an embodiment of the present disclosure. As illustrated in FIG. 5, the data sharing device includes:
a third acquisition module 501 configured to acquire service information for data sharing between a terminal and a host of the virtual desktop; and
a management module 502 configured to perform an operation for data sharing according to the service information for data sharing.

In an implement of the embodiment of the present disclosure, the data sharing device further includes:
a fourth acquisition module configured to acquire an operation result of the data being shared; and
a second transmission module configured to transmit the operation result.

In another implement of the embodiment of the present disclosure, the management module 502 includes an acquisition unit, an authentication unit and a reading unit.

The acquisition unit is configured to, when the service information for data sharing indicates that the terminal requests to share local data with the host of the virtual desktop, acquire identity authentication information in the service information. The identity authentication information is generated by the terminal.

The authentication unit is configured to perform identity authentication on the terminal utilizing the identity authentication information.

The reading unit is configured to read data to be shared with the host of the virtual desktop after the identity authentication is successful on the terminal.

After having received the service information for data sharing, the data sharing device provided by the embodiment of the present disclosure manages data being shared according to the service information, so as to effectively achieve the data sharing and migration function of the virtual desktop to make the operation for data sharing by the user simple and clear.

An application example is provided below to give further explanation.

The following describes a network of a virtual desktop based on the VDI architecture and the Spice transport protocol. Functions of each network element in the networking diagram are described below.

Spice Vdagent involved in this application example runs in the virtual desktop, participates in interactions with the Spice client to achieve service control and data sharing and the like.

Functions of units which are newly added to the virtual desktop agent are described below.

A first message processing unit is configured to interact with external units (e.g., the Spice client and Spice server), to perform parameter validation, parse messages and notify a first sharing processing unit to process services.

The first sharing processing unit is configured to perform the operation for data sharing, i.e., to construct corresponding scripts and instructions according to parameters (mainly including a type of the operating system of the client, sharing type, IP address set of the clients, username and password for sharing, shared disk and directory path, etc.) obtained from the Spice client and to execute the scripts and instructions, so as to complete operations such as mounting or offloading for the data sharing.

A first sharing monitoring unit is configured to monitor changes of shared information, and notify the client of the changes for the purpose of keeping consistent.

Functions of each unit of the virtual desktop client are described below.

A user interaction unit is configured to: perform an operation for setting or cancelling data sharing in cooperation with the user; notify the user of an operation result; and display shared information and the like.

A second sharing processing unit is one of units for service implementation. The second sharing processing unit is configured to: create a disk and a directory to be shared and create a specific username and a password for sharing according to user's control information; splice shared path parameters; splice IP information of the client (multiple IPs are also considered) according to rules, and transmit sharing information to a second message transmission unit.

The second message transmission unit has a function similar to the first message transmission unit and is used for message interaction.

A second sharing monitoring unit has a function similar to the first sharing monitoring unit, and is configured to keep the shared information consistent with the client.

The following description is made with the above-described processing units as an example.

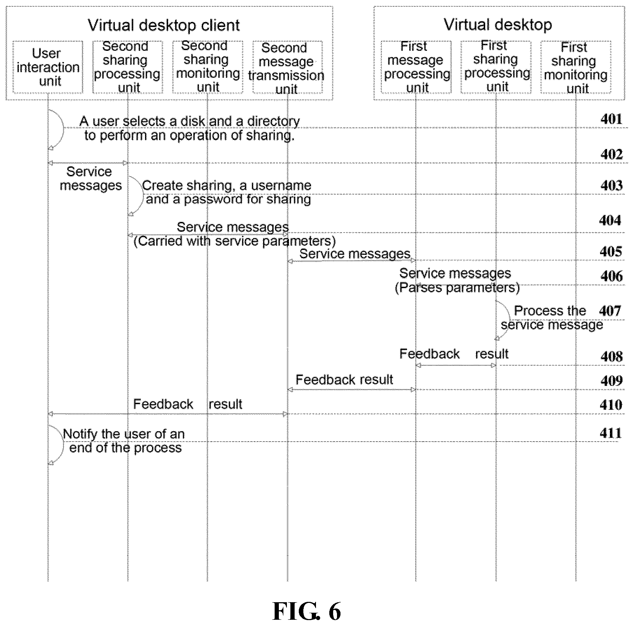

FIG. 6 is an interaction diagram of a data sharing method for a client and a virtual desktop according to an embodiment of the present disclosure. As illustrated in FIG. 6, the process of the interaction includes the following steps.

In step 401, information regarding that the user of the virtual desktop selects to perform sharing operation on a disk, directory or file or cancel the sharing operation, is obtained.

In step 402, a service message is transmitted.

In step 403, which is one of main service flows, a disk and a directory to be shared are created, a specific username and a password for sharing are created, the sharing path is spliced, and IP (multiple IPs are also considered) information of the clients is spliced according to rules.

In step 404, a service control message is transmitted.

In step 405, the service control message is transmitted to a virtual desktop agent process in the virtual desktop through a Splice channel, and inter-node message exchange is implemented.

In step 406, the service message is validated, parsed and processed, and a processing result is transmitted to the virtual desktop agent process.

In step 407, service logic processing of an operation for data sharing or sharing cancelling is executed according to service message parameters. In this step, IP interoperability, multi-disk and directory sharing, distinguishing between client operating system types and other issues are considered so that the operation for data sharing or sharing cancelling is performed.

In step 408, an operation result is fed back.

In step 409, the operation result is fed back to the client.

In step 410, the operation result is transmitted.

In step 411, a final processing result is presented to the user to complete the overall message exchange.

As can be seen from the above, the embodiment of the present disclosure provides a system and method for achieving data sharing between the client and the virtual desktop based on the VDI architecture and the Spice transport protocol. Based on the VDI architecture and the Spice transport protocol, via reconstructions of the Spice Vdagent and the Spice client and in conjunction with control of an operation and maintenance management module, this system effectively achieves the data sharing and migration function of the virtual desktop to make the operation for data sharing by the user simple and clear.

It will be understood by those ordinary skilled in the art that all or part of the steps in the above-described embodiments may be implemented utilizing one or more computer programs. The computer programs may be stored in a computer readable storage medium and executed on a corresponding hardware platform (e.g., system, device, apparatus or component and the like). During the execution of these programs, one of or a combination of the steps in the above-described method embodiments is implemented.

Optionally, all or part of the steps in the above-described embodiments may also be implemented utilizing one or more integrated circuits. These steps may be manufactured as integrated circuit modules separately or part of these modules or steps may be manufactured as a single integrated circuit module for implementation.

The various devices/function modules/function units in the above-described embodiments may be implemented on a general-purpose computing device. They may be concentrated on a single computing device or distributed over a network composed of multiple computing devices.

The various devices/function modules/function units in the above-described embodiments are implemented by software function modules, and can be stored in a computer-readable storage medium when sold or used as stand-alone products. The above-described computer-readable storage medium may be a read-only memory, a magnetic disk or an optical disk, etc.

### INDUSTRIAL APPLICABILITY

In embodiments of the present disclosure, the service information for data sharing is transmitted to manage data being shared according to the service information, so that the data sharing and migration function of the virtual desktop are effectively achieved and the operation for data sharing by the user becomes simple and clear.

## Claims

1. A data sharing method for a virtual desktop, comprising:
acquiring information about an operation request for performing data sharing between a local terminal and a host of the virtual desktop;
generating service information for data sharing according to the information about the operation request; and
transmitting the service information for data sharing.

2. The method according to claim 1, wherein after transmitting the service information for data sharing, the method further comprises:
acquiring an operation result of data being shared; and
outputting the operation result of data being shared.

3. A data sharing method for a virtual desktop, comprising:
acquiring service information for data sharing between a terminal and a host of the virtual desktop; and
performing an operation for data sharing according to the service information for data sharing.

4. The method according to claim 3, wherein after performing the operation for data sharing according to the service information for data sharing, the method further comprises:
acquiring an operation result of data being shared; and
transmitting the operation result.

5. The method according to claim 3 or 4, wherein when the service information for data sharing indicates that the terminal requests to share local data with the host of the virtual desktop, performing the operation for data sharing according to the service information for data sharing comprises:
acquiring identity authentication information in the service information, wherein the identity authentication information is generated by the terminal;
performing identity authentication on the terminal utilizing the identity authentication information; and
reading data to be shared with the host of the virtual desktop after the identity authentication is successfully performed on the terminal.

6. A data sharing device for a virtual desktop, comprising:
a first acquisition module configured to acquire information about an operation request for performing data sharing between a local terminal and a host of the virtual desktop;
a generation module configured to generate service information for data sharing according to the information about the operation request; and
a first transmission module configured to transmit the service information for data sharing to the host of the virtual desktop.

7. The device according to claim 6, further comprising:
a second acquisition module configured to acquire an operation result of data being shared; and
an outputting module configured to output the operation result of data being shared.

8. A data sharing device for a virtual desktop, comprising:
a third acquisition module configured to acquire service information for data sharing between a terminal and a host of the virtual desktop; and
a management module configured to perform an operation for data sharing according to the service information for data sharing.

9. The device according to claim 8, further comprising:
a fourth acquisition module configured to acquire an operation result of data being shared; and
a second transmission module configured to transmit the operation result.

10. The device according to claim 8 or 9, wherein the management module comprises:
an acquisition unit configured to, when the service information for data sharing indicates that the terminal requests to share local data with the host of the virtual desktop, acquire identity authentication information in the service information, wherein the identity authentication information is generated by the terminal;
an authentication unit configured to perform identity authentication on the terminal utilizing the identity authentication information; and
a reading unit configured to read data to be shared with the host of the virtual desktop after the identity authentication is successfully performed on the terminal.

11. A computer-readable storage medium for storing computer-executable instructions, wherein the computer-executable instructions are configured to execute the method according to any one of claims 1 to 5.
